# EUROPEAN PATENT APPLICATION

(11) **EP 1 830 361 A1**
(43) Date of publication of application: **05.09.2007**
(21) Application number: 07250713.0
(22) Date of filing: 21.02.2007
(51) Int. Cl.: G11B 27/34, G11B 27/10

(54) **Image displaying method and video playback apparatus**

(30) Priority: 02.03.2006 JP 2006055942
(71) Applicant: Sony Corporation, Minato-ku Tokyo (JP)
(72) Inventor: Abe, Yuichi, Minato-ku Tokyo (JP); Sasaki, Toru, Minato-ku Tokyo (JP); Sako, Yoichiro, Minato-ku Tokyo (JP); Terauchi, Toshiro, Minato-ku Tokyo (JP); Takehara, Mitsuro, Minato-ku Tokyo (JP); Nakamura, Takatoshi, Minato-ku Tokyo (JP)
(74) Representative: Smith, Samuel Leonard

(57) **Abstract**

A video playback apparatus includes a thumbnail creating unit for creating thumbnail image data for a video file, and a user operation unit for receiving an instruction from a user. The thumbnail creating unit divides a total playback duration time T of the video file into 2^n intervals and creates the thumbnail image data from the first frame of each of the divided intervals. The thumbnail creating unit then supplies the created thumbnail image data to an image displaying unit to display thumbnail images. Upon the user operation unit receiving a first predetermined operation, the thumbnail creating unit increments the value n by 1 to increase the number of thumbnail images. Upon the user operation unit receiving a second predetermined operation, the thumbnail creating unit decrements the value n by 1 to decrease the number of thumbnail image.

## Description

The present invention contains subject matter related to Japanese Patent Application JP 2006-055942 filed in the Japanese Patent Office on March 2, 2006, the entire contents of which are incorporated herein by reference.

The present invention relates to an image displaying method and a video playback apparatus that allows users to easily recognize content of many video files.

With the widespread use of digital cameras, video cameras, and mobile phones, anyone can shoot videos readily. In addition, an increase in the network speed-allows distribution of videos, such as movies and music videos. Furthermore, private movies are disclosed on Web pages and blogs.

As a result, many video files are stored in personal computers, home servers, or NAS (network attached storage). Users have to select a target video file from the many video files to view the video, when the users have the video that the users desire to see. In such a case, there is a method for selecting the target file with file management software (i.e., a file management program) such as "Explore".

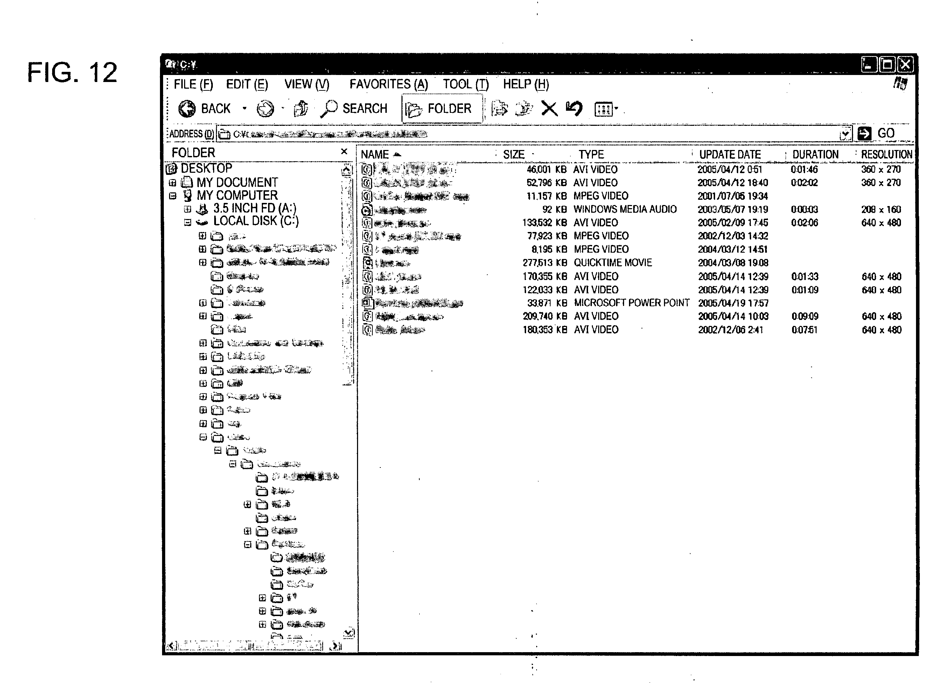

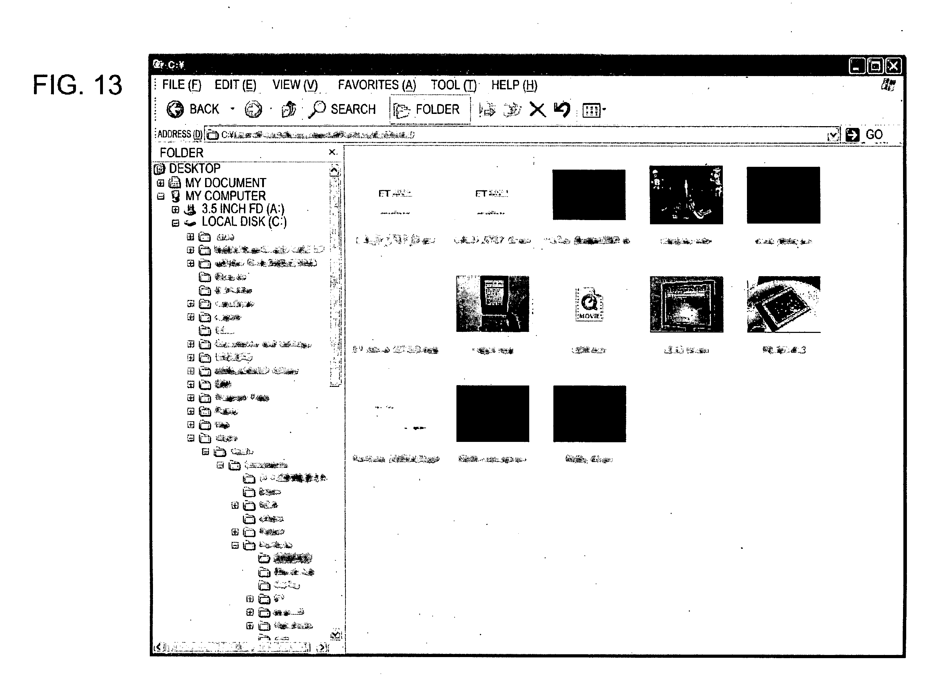

More specifically, execution of file management software causes a list of file names of video files contained in a directory (i.e., a folder) to be created and the list to be displayed as shown in, for example, Fig. 12. A target video file is selected by specifying a file name of the target video file with a mouse or the like. Alternatively, as shown in Fig. 13, thumbnail image data (hereinafter, simply referred to as thumbnails) of video files contained in a directory is created, and a list of the thumbnails is displayed. Specification of a thumbnail of a target video file with a mouse or the like causes the target file to be selected.

Furthermore, there is file management software that creates video thumbnails and still image thumbnails for video files and stores the thumbnails in recording media specified by users in advance.

Accordingly, the above-mentioned file management software allows selection of a target video file from a file name or a thumbnail and viewing of the target video.

As a document describing a known technology, there is Japanese Unexamined Patent Application Publication No. 2005-117369, for example.

In a method shown in Fig. 12, since users have to find out the content of files on the basis of file names or creation date, the users may not appropriately know the content of the files in some cases. As a result, the users repeat an operation of selecting a file and an operation of playing back the content of the selected file, which may undesirably involve troublesome operations and prevent the users from easily selecting the target file.

On the other hand, since a method shown in Fig. 13 allows users to know the content of files by thumbnails, this method has an advantage over the method shown in Fig. 12. However, in the displaying method shown in Fig. 13, for example, in a case where videos start with a fade-in or a logo of a production company, all of the thumbnails may be black blank images or images of the same logo, which makes it difficult for users to know the content of the files from the thumbnails.

Furthermore, in a method for creating video thumbnails and still image thumbnails for video files and storing the thumbnails on recording media, users have to specify frames representing the videos as the video thumbnails. In addition, even with a capability of automatically specifying the frames, a predetermined interval of the video is selected as the video thumbnail, and the selected interval does not necessarily represent the content of the video. Moreover, limitation is provided regarding the number of video thumbnails, and it may be impossible to confirm the content of the file by seeing other video thumbnails.

Embodiments of the present invention are to overcome the above-described disadvantages.

According to an embodiment of the present invention, a video playback apparatus includes a thumbnail creating unit for creating thumbnail image data for a video file, and a user operation unit for receiving an instruction from a user. The thumbnail creating unit divides a total playback duration time T of the video file into 2^n (n is an integer not less than 0) intervals and creates the thumbnail image data from image data of the first frame of each of the divided intervals. The thumbnail creating unit then supplies the created thumbnail image data to an image displaying unit to cause the image displaying unit to display thumbnail images corresponding to the thumbnail image data. Upon the user operation unit receiving a first predetermined operation, the thumbnail creating unit increments the value n by 1 to increase the number of thumbnail images, corresponding to the thumbnail image data, to be displayed on the image displaying unit. Upon the user operation unit receiving a second predetermined operation, the thumbnail creating unit decrements the value n by 1 to decrease the number of thumbnail images, corresponding to the thumbnail image data, to be displayed on the image displaying unit.

Since embodiments of the present invention allow users to dynamically change the number of thumbnails to be displayed according to users' understanding of the content of video files, the users can accurately recognize the content of the video files without actually playing back the video files. As a result, the users can easily select a target video file and directly watch the target video.

The invention will now be described, purely by example, and with reference to the following Figures.
Figs. 1A to 1C are diagrams showing an embodiment of the present invention;
Figs. 2A to 2F are diagrams illustrating an embodiment of the present invention;
Fig. 3 is a diagram showing a display state according to an embodiment of the present invention;
Fig. 4 is a diagram showing a display state according to an embodiment of the present invention;
Fig. 5 is a diagram showing a display state according to an embodiment of the present invention;
Fig. 6 is a diagram showing a display state according to an embodiment of the present invention;
Figs. 7A to 7C are diagrams showing another embodiment of the present invention;
Figs. 8A to 8C are diagrams showing another embodiment of the present invention;
Fig. 9 is a schematic diagram showing an embodiment of the present invention;
Fig. 10 is a flowchart showing an embodiment of the present invention;
Fig. 11 is a functional block diagram showing an embodiment of the present invention;
Fig. 12 is a diagram illustrating a known method; and
Fig. 13 is a diagram illustrating a known method.

### [1] Overview of the Present Invention

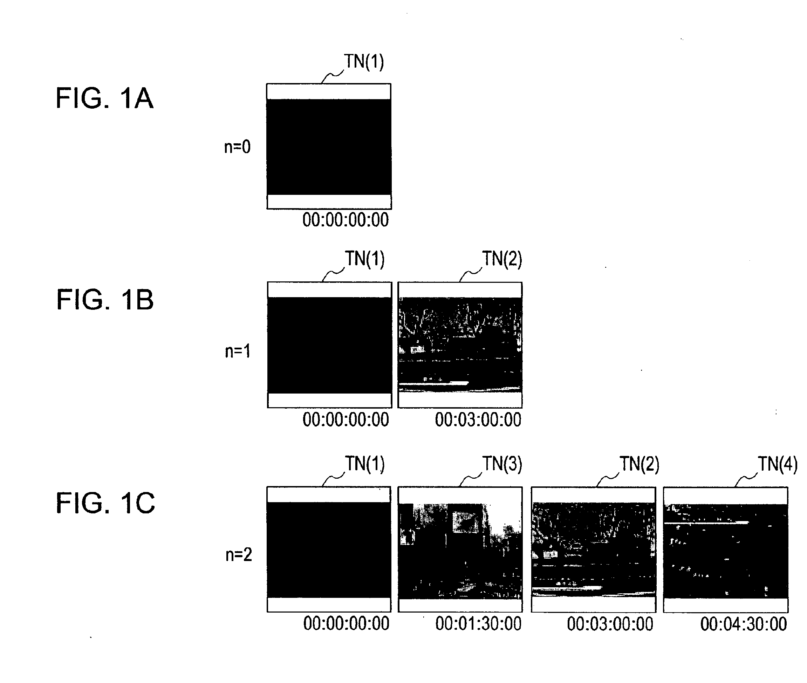

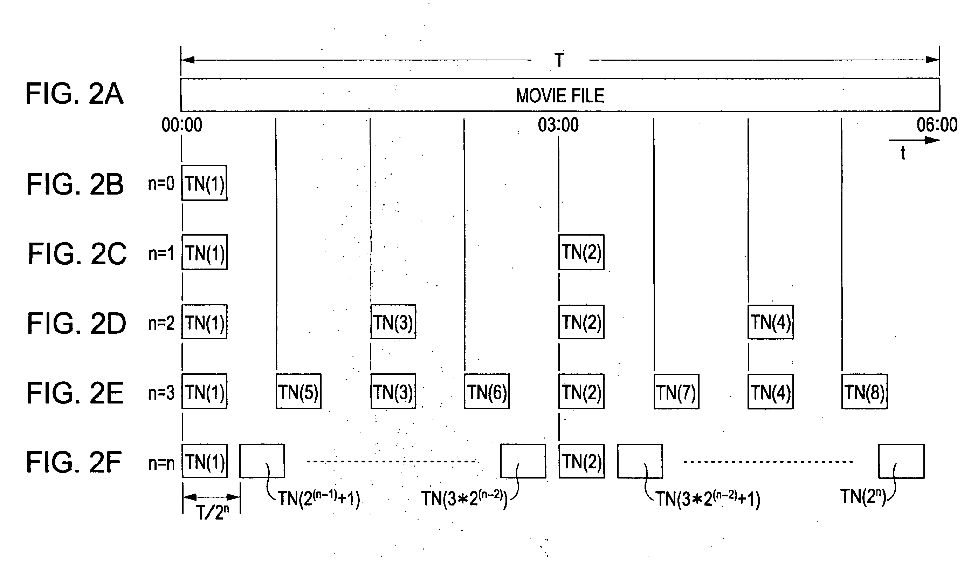

Embodiments of the present invention are to express the content of video files using thumbnails. Usage of file management software according to an embodiment of the present invention and thumbnails displayed when the software is used are described with reference to Figs. 1A to 1C. The following description is that of a case where a given video file is focused on. In addition, suppose that the total playback duration time T of the video file is 6 minutes.
(A) Upon activating the software, a thumbnail TN (1) of a video file is displayed on a display as shown in Fig. 1A. As shown in Figs. 2A and 2B, the thumbnail TN(1) is created from a frame obtained at a playback time point of 0 minutes of a video file (shown in Fig. 2A), namely, the first frame.
(B) A first operation (n = 1, where n represents the number of times the operation is performed) causes a second thumbnail TN(2) to be displayed on the right side of the first thumbnail TN(1) as shown in Fig. 1B. The thumbnail TN(2) is created from a frame obtained at a playback time point of 3 (= T/2) minutes of the video file as shown in Figs. 2A and 2C.
(C) As shown in Fig. 1C, after a second operation (n = 2), a third thumbnail TN(3) is displayed between the first thumbnail TN(1) and the second thumbnail TN(2), and a fourth thumbnail TN(4) is displayed on the right side of the thumbnail TN(2).
   In this case, as shown in Figs. 2A and 2D, the thumbnail TN(3) is created from a frame obtained at a playback time point of 1.5 (= T/4) minutes of the video file, whereas the thumbnail TN(4) is created from a frame obtained at a playback time point of 4.5 (= 3T/4) minutes of the video file.
(D) A third operation (n = 3) causes new thumbnails TN(5), TN(6), TN(7), and TN(8) to be displayed on the right side of the existing thumbnails TN(1), TN(3), TN(2), and TN(4), respectively, as shown in Fig. 2E.
   In this case, as shown in Figs. 2A and 2E, the thumbnail TN(5) is created from a frame obtained at a playback time point of 0.75 (= T/8) minutes of the video file, whereas the thumbnail TN(6) is created from a frame obtained at a playback time point of 2.25 (= 3T/8) minutes of the video file. In addition, the thumbnail TN(7) is created from a frame obtained at a playback time point of 3.75 (= 5T/8) minutes of the video file, while the thumbnail TN(8) is created from a frame obtained at a playback time point of 5.25 (= 7T/8) minutes of the video file.
(E) Similarly, as shown in Fig. 2F, an nth operation causes the total playback duration time T of the video file to be divided into 2^n equal intervals, thumbnails TN(p) (p = 1 to 2^n) to be created from the first frame of each of the equally divided intervals and to be displayed in an order of time of the frames from which the thumbnails TN(p) are created.
   That is, every time a predetermined operation is performed, the number of thumbnails is doubled and the thumbnails are created from frames so that the interval between the frames corresponding to neighboring two thumbnails becomes a half of the original interval, and the created thumbnails are displayed. In practice, for example, when n is changed from 1 to 2 (see, Figs. 2C and 2D), only the thumbnails TN(3) and TN(4) are newly created and displayed in addition to the existing thumbnails TN(1) and TN(2). That is, when the number of times the operation is performed n increases, only thumbnails to be displayed due to the increase are created and displayed in addition to existing thumbnails.
(F) For example, if an operation for the opposite direction is performed at a display state (n = 2) shown in Fig. 1C, the display state is changed into the one (n = 1) shown in Fig. 1B, and the number of thumbnails TN(p) is reduced by half. That is, if the operation for the opposite direction is performed, the display state is returned to the one that is displayed when the number of times the operation is performed n decreases by 1.
   Such a file management method permits users to recognize the content of the video file without actually playing back the video file by increasing the number of thumbnails when the users desire to know the content of the video file in detail. More specifically, the users repeat the operation for creating the thumbnails TN(p) until the users can recognize the content of the video file. Upon recognizing the content, the users stop performing the operation. Accordingly, the number of operations performed at the time to recognize the content of the video file can be suppressed to a minimum value and the content can be recognized accurately without actually playing back the video file.

As a result, users can easily select the target video file and directly watch the target video. In addition, searching of a scene in the video can be performed quickly and easily.

### [2] Illustrative Examples of Displaying Method

Now, illustrative examples of a thumbnail displaying method will be described. More specifically, actual operations and thumbnails to be displayed on a display due to the operations will be described.

### [2-1] First Displaying Method

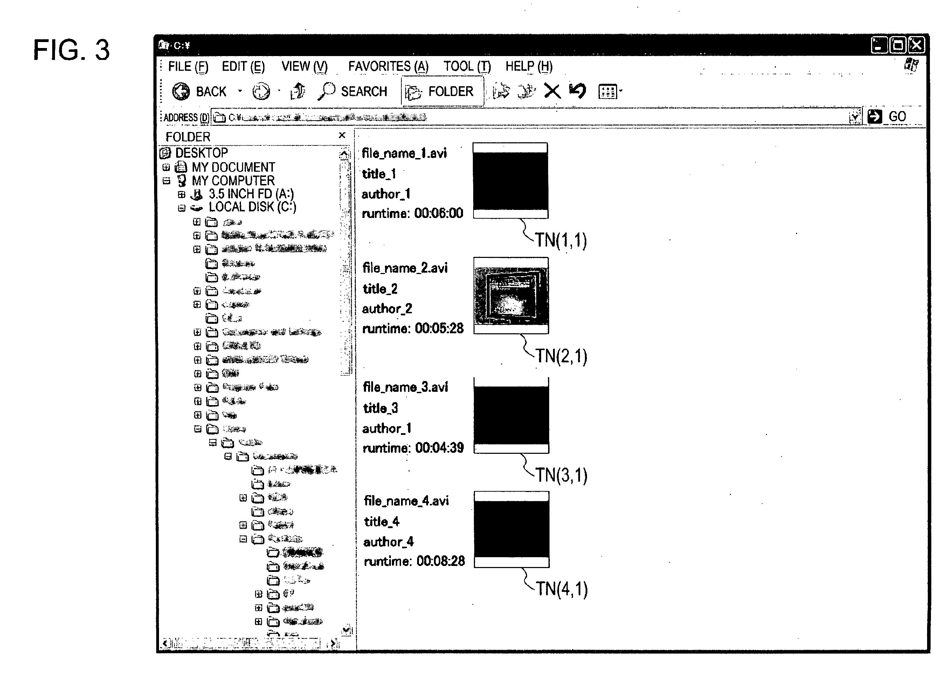

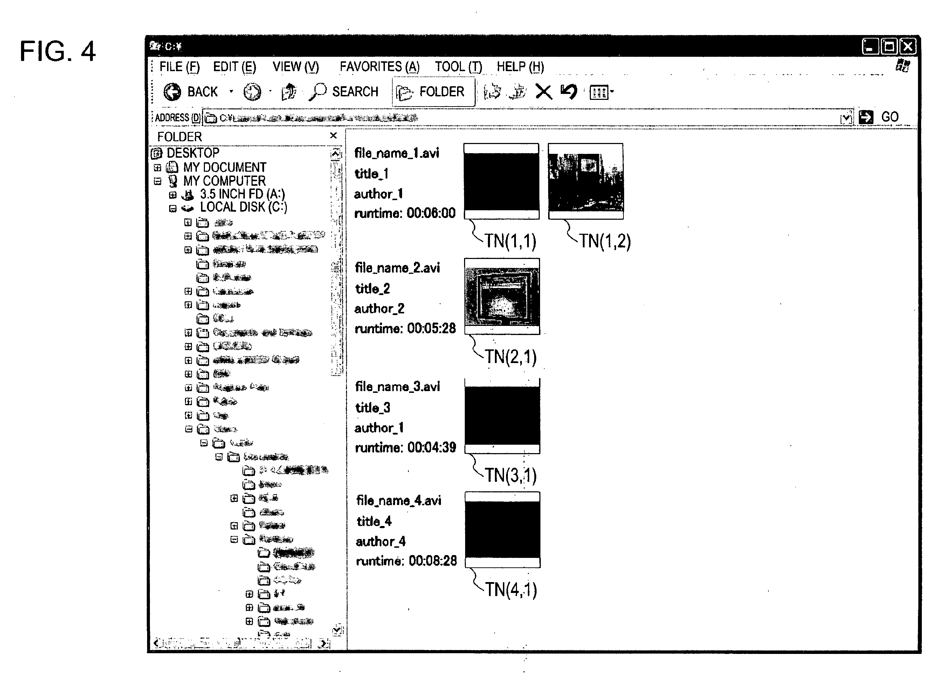

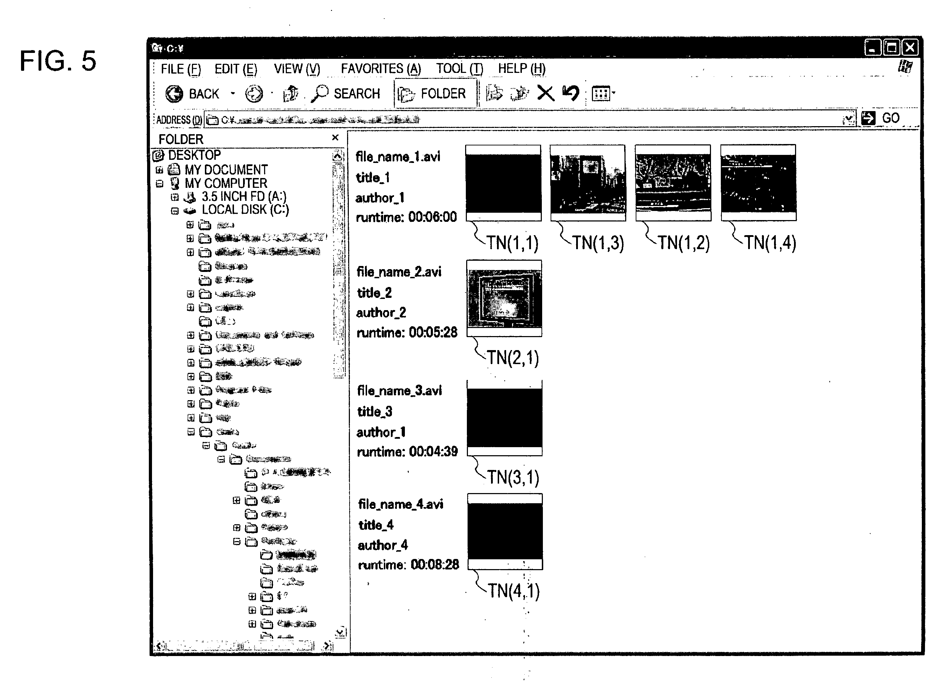

(A) If users select a directory containing video files after activating file management software, thumbnails are created from the first frame of each of the video files contained in the directory and the created thumbnails are displayed as shown in Fig. 3, for example. Fig. 3 shows a case where the target directory contains four-video files (whose file names are file_name_1.avi to file_name_4.avi). Thumbnails TN(k,1) (k = 1 to 4) are created from the first frame of each file, and displayed in tandem.
   In this case, on the left side of the thumbnail TN(k, 1), information, such as a file name, a title, a creator name, and a total playback duration time of the video file from which the thumbnail TN(k, 1) is derived, is displayed in a text. In a case where there are too many thumbnails for the first frames to display them all on a screen, all of the thumbnails are sequentially displayed by scrolling the screen in a vertical direction.
(B) If users single-click a left button of a mouse (n = 1) to select, for example, a first thumbnail TN(1,1), a second thumbnail TN(1,2) is displayed on the right side of the first thumbnail TN(1,1) as shown in Fig. 4, for example. The thumbnail TN(1,2) is created from a frame obtained at a playback time point T/2 of the video file (whose file name is file_name_l.avi) corresponding to the clicked thumbnail TN(1,1).
(C) If the users single-click the left button of the mouse again (n = 2) to select, for example, the first thumbnail TN(1,1) or the second thumbnail TN (1,2), a third thumbnail TN(1,3) and a fourth thumbnail TN(1,4) are displayed on the right side of the first thumbnail TN(1,1) and the second thumbnail TN(1,2), respectively. The thumbnails TN(1,3) and TN(1,4) are created from frames obtained at playback time points T/4 and 3T/4 of the video file (whose file name is file_name_1.avi) corresponding to the clicked thumbnail TN(1,1) or TN(1,2), respectively.
(D) Similarly, every time the users single-click the left button of the mouse to select, for example, the first thumbnail TN(1,1) or the thumbnail TN (1,p) relating to the same video file, the number of times the operations is performed n is incremented by 1. The total playback duration time T of the video file (whose video file is file_name_l.avi) is divided into 2^n equal intervals. Thumbnails (1,p) are created from the first frame of each of the equally divided intervals and the created thumbnails (1,p) are displayed in an order of time.
   In a case where there are too many thumbnails TN(1,p) for the video file (whose file name is file_name_1.avi) to display them all on a screen, all of the thumbnails are sequentially displayed by scrolling the screen in a horizontal direction.
(E) For example, if the users single-click a right button of the mouse to select, for example, the first thumbnail TN(1,1) or the thumbnail TN(1,p) relating to the same video file at a display state (n = 2) shown in Fig. 5, the number of times the operation is performed n is decremented by 1. The display state is changed into the one shown in Fig. 4 (n = 1), and the number of thumbnails is reduced.
(F) The above-described operations (A) to (E) can be performed on other thumbnails TN(2,p) to TN(4,p) in a similar manner.
(G) Upon finding the target thumbnail or upon recognizing the target video file on the basis of the thumbnails, the users double-click the left button of the mouse to select the first thumbnail TN(i,1) (i = one of values 1 to k) of the target video file. This operation triggers starting of the playback of the video file from which the clicked thumbnail TN(i,1) is derived. When one of the second or following thumbnails other than the first thumbnail TN(i,1) among the displayed thumbnails is selected by double-clicking the left button of the mouse, the playback of the video file may be started.

### [2-2] Second Displaying Method

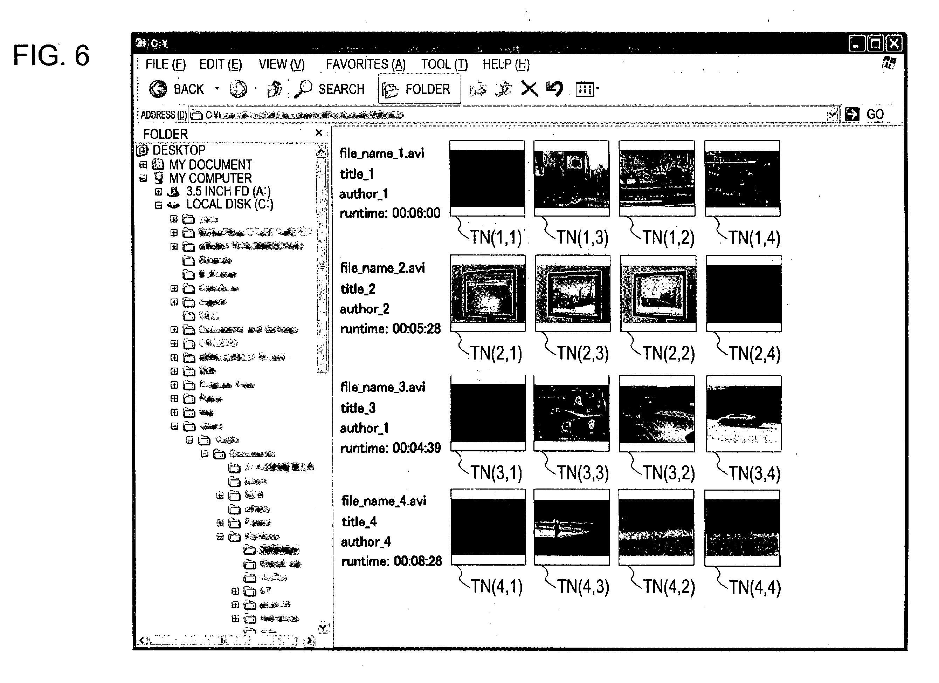

In this example, the number of thumbnails to be created (= 2^n) is set in accordance with the value of n representing the number of times the clicking operation of the left button of the mouse is performed for all of the video files. For example, when the number of times the operation is performed n is set at 2 (n = 2), four thumbnails are simultaneously displayed for each of the video files as shown in Fig. 6. Other operations and the displaying manner are the same as those described in [2-1]. In this displaying method, a mouse pointer may be placed over any one of the thumbnails.

### [2-3] Third Displaying Method

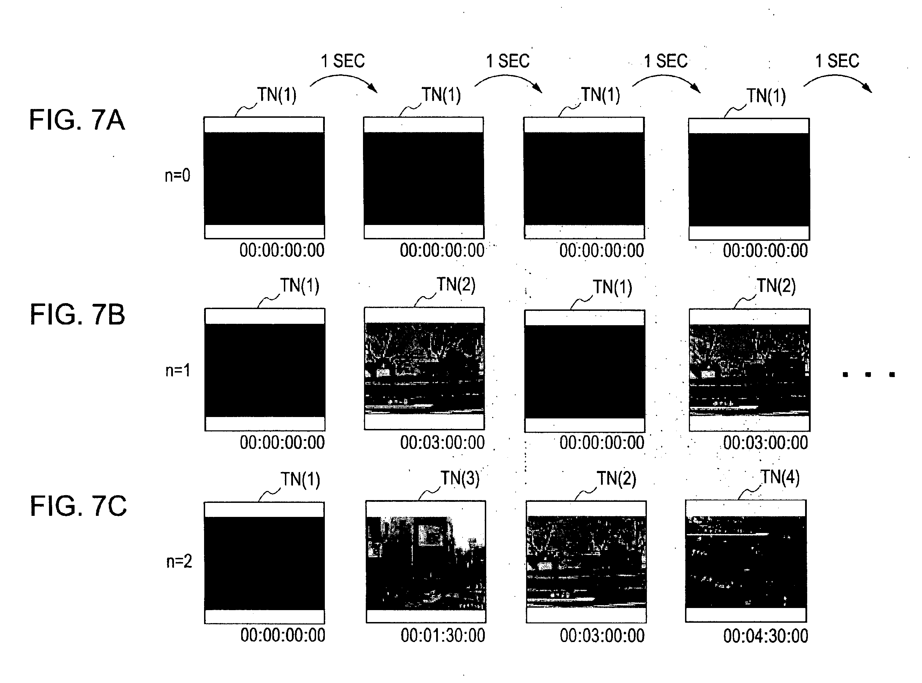

This example assumes a case where the thumbnails are displayed in a slide show format as shown in Figs. 7A to 7C. In Figs. 7A to 7C, the description is given while focusing on a given video file as in the case shown in Figs. 1A to 1C.

In this example, the following displaying manner and operations are performed.
(A) Upon activating software, a thumbnail TN (1) is created from the first frame of the video file and the thumbnail TN(1) is repeatedly displayed at intervals of, for example, 1 second as shown in Fig. 7A. In this case, since only displaying of the same thumbnail TN(1) is updated at the intervals of 1 second, it appears that the thumbnail TN(1) does not change.
(B) If users perform a first mouse operation (e.g., a left-mouse-button-clicking operation) (n = 1), the first thumbnail TN(1) and a second thumbnail TN(2) are displayed repeatedly and alternately at intervals of 1 second as shown in Fig. 7B. More specifically, in Fig. 1B, two thumbnails TN(1) and TN(2) are simultaneously displayed in parallel, whereas in Fig. 7B, two thumbnails TN(1) and TN(2) are displayed repeatedly and alternately.
(C) If the users perform a second mouse operation (n = 2), the first to fourth thumbnails TN(1) to TN(4) are displayed by turns at intervals of 1 second as shown in Fig. 7C. More specifically, in Fig. 1C, four thumbnails TN(1) to TN(4) are simultaneously displayed in parallel, whereas in Fig. 7C, four thumbnails TN(1) to TN(4) are displayed repeatedly in turn.
(D) Thereafter, similarly, if the user performs an nth mouse operation, the first to kth thumbnails TN(p) are displayed at intervals of 1 second repeatedly in turn.
(E) Thereafter, or example, if the users single-click a right button of the mouse on the displayed thumbnail at a display state (n = 2) as shown in, for example, Fig. 7C, the display state is returned to the one (n = 1) shown in Fig. 7B.
(F) Upon finding the target thumbnail or upon recognizing the target video file on the basis of the thumbnails, the users double-click the left button of the mouse on the thumbnail. This operation triggers starting of the playback of the video file from which the clicked thumbnail is derived. Likewise, in this displaying method, when one of the second or following thumbnails other than the first thumbnail TN(i,1) among the displayed thumbnails is selected by double-clicking the left button of the mouse, the playback of the video file may be started.

### [2-4] Fourth Displaying Method

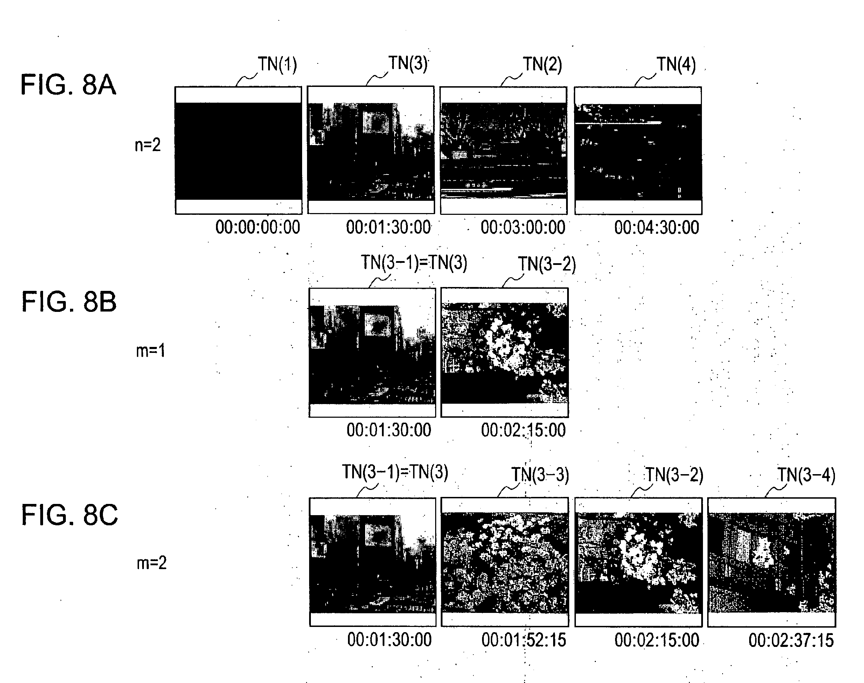

In this example, Figs. 8A to 8C show a case where thumbnails are created regarding a specific interval of a video file and displayed. In Figs. 8A to 8C, the description is given while focusing on a given video file as in the case shown in Figs. 1A to 1C. In addition, Fig. 8A shows the same display state (n = 2) as that shown in Fig. 1C.

In this example, the following displaying manner and operations are performed.
(A) If users single-click a left button of a mouse (m = 1, where m represents the number of times the operation is performed) to select a thumbnail TN(3) while pressing, for example, a specific key among keys on a keyboard at a display state shown in Fig. 8A, thumbnails TN(3-1) and TN(3-2) are displayed as shown in Fig. 8B.
   In this case, the thumbnail TN(3-1) is the same as the single-clicked thumbnail TN(3). In addition, the thumbnail TN(3-2) is created from a frame obtained at a playback time point equivalent to a center of a playback interval between a frame from which the thumbnail TN(3) is created and a frame from which the thumbnail TN(2) is created. Thus, the same operation performed when n is set to 3 (n = 3) is performed regarding the interval between the frame from which the thumbnail TN(3) is created and the frame from which the thumbnail TN(2) is created.
(B) At a display state shown in Fig. 8B, the users single-click the left button of the mouse (m = 2) to select the thumbnail TN(3-1) (without pressing a given key of the keyboard). This operation causes a thumbnail TN(3-3) to be displayed between the thumbnails TN(3-1) and TN(3-2) and a thumbnail TN(3-4) to be displayed on the right side of the thumbnail TN(3-2) as shown in Fig. 8C.
   In this case, the thumbnail TN(3-3) is created from a frame obtained at a playback time point equivalent to a center of a playback interval between the frame from which the thumbnail TN(3-1) is created and the frame from which the-thumbnail (3-2) is created of the video file. In addition, the thumbnail TN(3-4) is created from a frame obtained at a playback time point equivalent to a center of a playback interval between the frame from which the thumbnail TN(3-2) is created and the frame from which the thumbnail TN(2) is created of the video file.
   That is, the thumbnails TN(3-3) and TN(3-4) are created from the frames obtained at the playback time points of a quarter and three quarters of the playback interval between the frame from which the thumbnail TN(3) is created and the frame from which the thumbnail TN(2) is created of the video file, respectively.
(C) Thereafter, similarly, if the users single-click the left button of the mouse to select, for example, the thumbnail TN(3-1) while pressing a specific key of the keyboard m times, a playback interval, between the frame from which the single-clicked thumbnail TN(3) is created and the frame from which the following thumbnail TN(2) in the same layer as the thumbnail TN(3) (in the current case, a layer of n = 2) is created, is divided into 2^m equal intervals, and the thumbnails TN(3-1) to TN(3-q) (q = 1 to 2^m) are created from the first frame of each equally-divided interval and displayed in an order of time.
(D) For example, the users single-click a right button of the mouse to select, for example, the first thumbnail TN(3-1) at the display state (m = 2) shown in Fig. 8C. This operation causes the value of m, which represents the number of times the operation is performed, to be decremented by 1, and the display state to be changed into the one (m = 1) shown in Fig. 8B, and the number of the thumbnails to be decreased.
(E) That is, in the case described in [1], [2-1], [2-2], and [2-3], thumbnails are created regarding the total playback duration time T of the video file and displayed. However, in this example, thumbnails are created regarding the interval between the frame for the selected thumbnail and the frame for the following thumbnail in the same layer as the selected one and displayed.
   Thus, according to this example, the number of the thumbnails is increased regarding a specific interval of the video file, which can make intervals between corresponding frames shorter with less number of thumbnails. As a result, larger thumbnails can be displayed or thumbnails can be displayed at shorter intervals.

### [3] Description of Hardware and Software

Now, hardware and software that realize the above-described displaying methods will be described.

### [3-1] Hardware

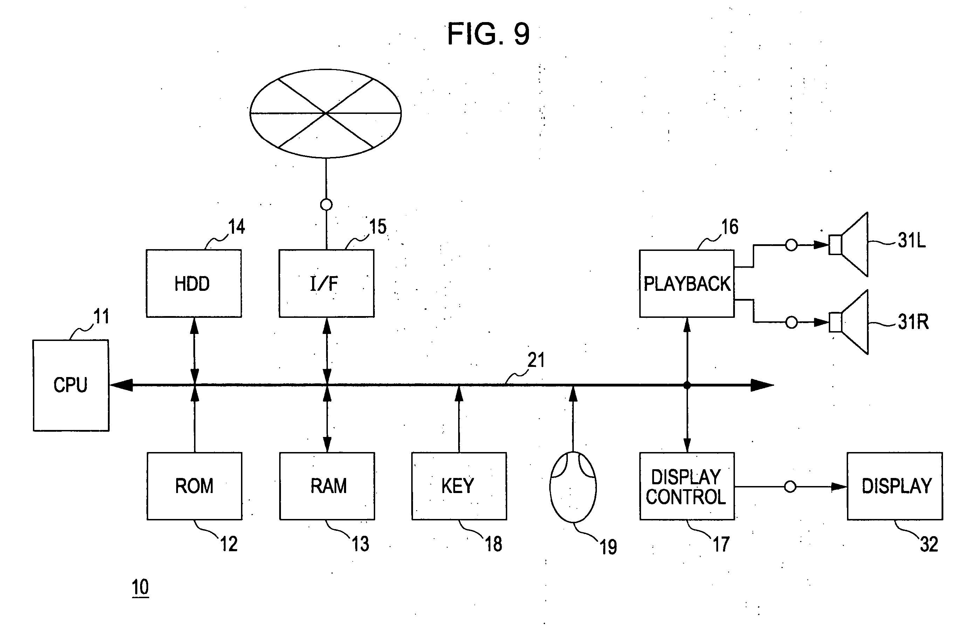

Fig. 9 shows an example of a personal computer 10 to which an embodiment of the present invention is applied. The personal computer 10 has the same configuration as general personal computers. More specifically, the personal computer 10 has a CPU (central processing unit) 11, a ROM (read only memory) 12, and a RAM (random access memory) 13. The CPU 11 executes various programs. The ROM 12 stores a BIOS executed by the CPU 11 and basic data. In addition, RAM 13 serves as a work area for the CPU 11 when the CPU 11 executes the programs. These memories, i.e., the ROM 12 and RAM 13, are connected to the CPU 11 through a system bus 21.

Furthermore, a hard disk drive 14 serving as a mass storage device is also connected to the system bus 21. In this case, the hard disk drive 14 stores an OS (operating system) that allows the personal computer 10 to work, programs (i.e., file management software) for realizing the thumbnail displaying methods and the playback of videos described in [1] and [2], and various video files.

In addition, a LAN (local area network) interface circuit 15 is connected to the system bus 21. The personal computer 10 is connected to an external network through the LAN interface circuit 15. Although not shown in the figure, home severs, NAS, or external servers are connected to the network.

Moreover, the personal computer 10 has an audio playback circuit 16 and a display control circuit 17, which are also connected to the system bus 21. Upon receiving digital audio data, the audio playback circuit 16 performs D/A (digital to analog) conversion on the digital audio data to generate analog audio signals, and supplies the analog audio signals to speakers 31L and 31R.

Additionally, the display control circuit 17 includes a video RAM (not shown). Display data is supplied to the video RAM, repeatedly read out at regular intervals, and converted into video signals. The display control circuit 17 supplies the video signals to a display 32 so as to display images. Furthermore, a keyboard 18 and a mouse 19 are connected to the system bus 21 as a character input device and a pointing device, respectively.

### [3-2] Software

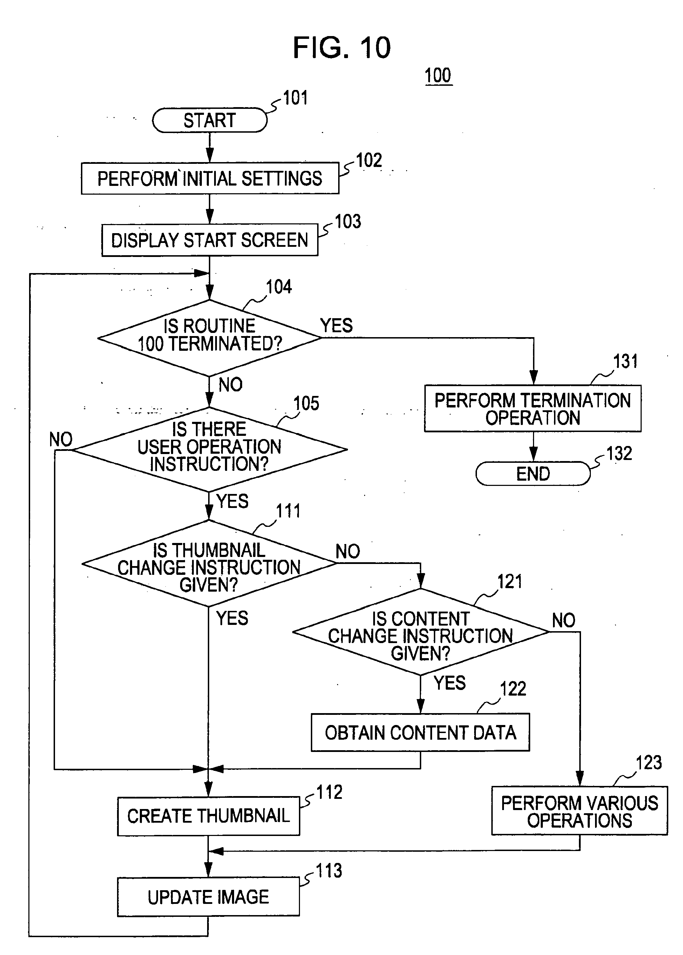

Fig. 10 shows an example of a routine (i.e., file management software) 100 that realizes the thumbnail displaying methods described in [1] and [2]. The routine 100 is stored in the hard disk drive 14, loaded to the RAM 13, and executed by the CPU 11. In Fig. 10, only a part of the routine 100 relating to embodiments of the present invention is selectively shown. In addition, users perform necessary operations with the keyboard 18 or the mouse 19.

More specifically, upon receiving an instruction of execution of the routine 100, the CPU 11 starts the routine 100 from STEP 101. At STEP 102, initial settings are then performed. The initial settings includes the following settings:
· acquisition of information of video files to be displayed on a start screen, e.g., acquisition of file names, titles, creator names, playback durations, etc. of the video files;
· setting of a display format at the time of displaying the video file information, e.g., setting regarding displaying the information in character strings or by thumbnails, setting of maximum size of the displayed thumbnails when information is displayed by thumbnails; and
· setting of a display type of information attached to the video files, e.g., display setting regarding duration, creator names, titles, date, and data size of the file.

The format of the initial settings may be predetermined or may be the same as those that users utilized the last time. In the following, suppose that the information regarding the video files is displayed on a start screen using thumbnails.

Then, the process proceeds to STEP 103. According to the settings performed at STEP 102, a start screen is displayed on the display 32, for example, as shown in Fig. 3. Thereafter, whether the routine 100 is terminated or not is determined at STEP 104. Conditions for termination of the routine 100 may be when the users instruct the termination or when system errors, such as a memory full error and an overflow error, occur.

When the routine 100 is not terminated, the process proceeds to STEP 105 from STEP 104. At STEP 105, whether an operation instruction is given from the users or not is determined. The operation instruction from the users may be, for example, an instruction for changing thumbnails to be displayed as described in [1] and [2], an instruction for deciding or changing the video file to be displayed, an instruction for terminating displaying of the video file, and an instruction for performing various operations (e.g., a playback operation, a stop operation, a fast rewind operation, and a fast forward operation) on the displayed video file.

If the operation instruction is not given from the users, the process proceeds to STEPs 112 and 113 from STEP 105. Although the detail is described below, displayed thumbnails are updated and then the process returns to STEP 104. Accordingly, thereafter, if there is no operation instruction given from the users, STEPs 104, 105, 112, and 113 are repeated and the routine 100 waits for the instruction from the users. In a current case, the routine 100 waits for the instruction from the users while continuously displaying the start screen, which is displayed at STEP 103.

If the operation instruction is determined to be given from the users at STEP 105 at the instruction waiting state, the process proceeds to STEP 111 from STEP 105. At STEP 111, whether the operation instruction detected at STEP 105 is the instruction for changing the thumbnails or not is determined. The instruction for changing the thumbnails is an instruction for changing a displaying state of the thumbnails as described in [1] and [2], and the value of n or m, which represents the number of times the operation is performed on the mouse 19, changes at the time.

If the operation instruction is the instruction for changing the thumbnails, the process proceeds to STEP-112 from STEP 111. At STEP 112, data for displaying the thumbnails is created. As described in [1] and [2], the data for displaying the thumbnails is created in accordance with the value of n or m, representing the number of times the operation is performed, for each video file.

Then, at STEP 113, the data created at STEP 112 is supplied to the display control circuit 17, which causes the displaying of the thumbnails on the display 32 to be updated. In a current case, since the data for displaying the thumbnails is crated according to the value of n or m representing the number of times the operation is performed, the displayed thumbnails are updated as described in [1] and [2] .

After the displayed thumbnails are updated at STEP 113 in the above-described manner, the process then returns to STEP 104. Accordingly, thereafter, the routine 100 waits for the operation instruction from users while displaying the thumbnails updated at STEPs 112 and 113 on the display 32. If the operation instruction for the thumbnails is given from the users, STEPs 111 to 113 are repeated, which causes thumbnails to be updated as described in [1] and [2].

On the other hand, the operation instruction given from the user is determined not to be the instruction for changing the thumbnails at STEP 111, the process proceeds to STEP 121 from STEP 111. At STEP 121, whether the operation instruction detected at STEP 105 is an instruction for changing content or not is determined.

Here, the instruction for changing the content corresponds to an instruction for displaying content other than the one currently displayed or an instruction for stop displaying the currently displayed content. For example, when the content is managed using a directory hierarchical structure, the instruction for changing the content is issued by changing a directory currently used for displaying (i.e., a current directory). Alternatively, in a case where the number of displayable content at one time is small and there are other content to be displayed, an instruction for scrolling corresponds to the instruction for changing the content.

If the operation instruction is determined to be the instruction for changing the content at STEP 121, the process proceeds to STEP 122 from STEP 121. At STEP 122, data of the content that is newly displayed is acquired from the hard disk drive 14.

In this case, only index data of the content may be acquired as the content data. For example, when the content to be acquired is a movie (video file), it may take a long time to acquire all of the data. In such a case, only movie index information necessary for displaying the content, such as a title, a creator name, a playback duration time, a date, and a file size, is acquired, and all of the content data may be acquired when the instruction for playing back the video content is given.

After the content data is acquired in such a manner, the process proceeds to STEP 112, and the thumbnail data is created. Then, the process proceeds to STEP 113. Accordingly, thereafter, the content other than the one that has been displayed is newly displayed. For example, thumbnails for video files contained in another directory are displayed.

Furthermore, at STEP 121, if the operation instruction detected at STEP 105 is determined not to be the instruction for changing the content, the process proceeds to STEP 123 from STEP 121. At STEP 123, an operation corresponding to the operation instruction detected at STEP 105 is performed, and then the process proceeds to STEP 113. In this case, the operation to be performed at STEP 123 includes, for example, starting of a playback operation of the video selected with the thumbnail, stopping of the playback operation, a fast rewind operation, and a fast forward operation.

In addition, at STEP 104, the termination of the routine 100 is detected, the process proceeds to STEP 131 from STEP 104. At STEP 131, a termination operation of the routine 100 is performed. The routine 100 is terminated at STEP 132.

Accordingly, the routine 100 realizes the thumbnail displaying methods described in [1] and [2].

### [3-3] Functional Block Diagram

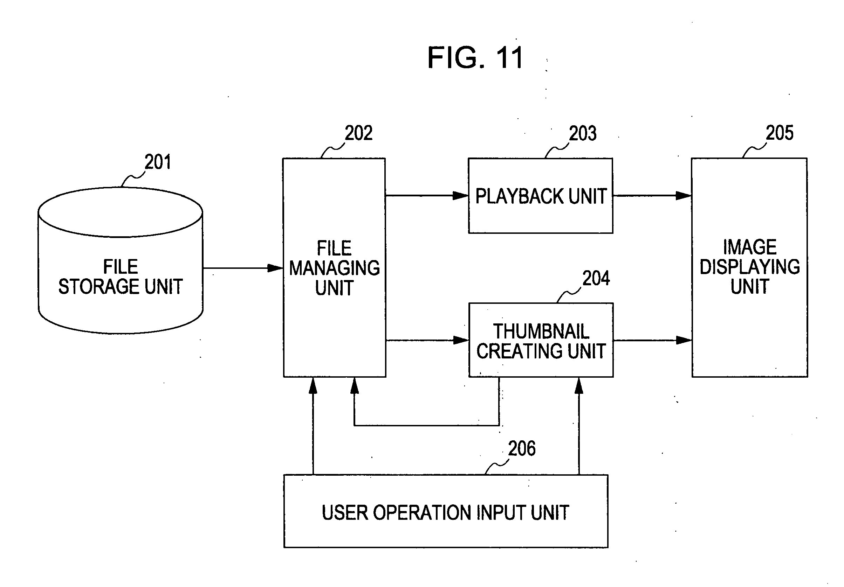

Fig. 11 is a functional block diagram of configurations described in [3-1] and [3-2]. More specifically, a file storage unit 201 stores video files. Generally, the video files are compressed according to a given data compression format. The file storage unit 201 corresponds to the hard disk drive 14 shown in Fig. 9. The file storage unit 201 is not necessarily included in the personal computer 10, and may be a home server, a NAS, or an external server connected to the personal computer 10 through the LAN interface circuit 15 or may be a plurality of servers.

Furthermore, a file managing unit 202 manages the video files stored in the file storage unit 201. The file managing unit 202 accesses the file storage unit 201 and performs operations, such as acquisition, edition, storage, and deletion of the video files, according to user operations or instructions given from a thumbnail creating unit 204, which is described below. In addition, a playback unit 203 receives the video files loaded from the file storage unit 201 by the file managing unit 202 and performs a decoding operation or the like according the data compression format, and outputs video signals to be displayed as a video.

Furthermore, the thumbnail creating unit 204 creates display data to be displayed as thumbnails for the video files loaded from the file storage unit 201 by the file managing unit 202. The thumbnail crating unit 204 also outputs video signals for displaying. An image displaying unit 205 displays thumbnails and target videos. Thus, the image displaying unit 205 receives the video signals from the playback unit 203 and the thumbnail creating unit 204.

Moreover, a user operation input unit 206 is a user interface for receiving instructions from users. The user operation input unit 206 corresponds to the keyboard 18 and the mouse 19. The file managing unit 202, the playback unit 203, and the thumbnail creating unit 204 may realized by the CPU 11 and the routine 100 executed by the CPU 11.

### [4] Summary

Since the above-described file management methods or apparatuses allow users to dynamically change the number of thumbnails to be displayed according to users' understanding of the content of video files, the users can accurately recognize the content of the video files without actually playing back the video files.

More specifically, the users repeat the operation for creating the thumbnails until the users can recognize the content of the video file. Upon recognizing the content, the users stop performing the operation. Accordingly, the number of operations performed at the time to recognize the content of the video file can be suppressed to a minimum value and the content can be recognized accurately without actually playing back the video file.

As a result, the users can easily select the target video file and directly watch the target video. In addition, searching of a scene in the video can be performed quickly and easily.

In addition, for example as shown in figures, in a case where the number of thumbnails is increased or decreased correctively for all of the video files, a time for operating each video file can be saved. Furthermore, comparison with other video files becomes easier.

Moreover, since the operations performed on a plurality of thumbnails are managed in an integrated fashion, operations for all of the displayed video files can be collectively performed, which allows users to search a desired scene easily with the similar operations performed on the video files. In addition, when the thumbnails are displayed in a slide show format, the users can recognize the content of the video files without increasing a space for displaying the thumbnails.

### [5] Others

In the above-described embodiments, the thumbnails are created from frames obtained at playback time points T/2^n of a video file and displayed. However, in addition to those thumbnails, thumbnails may be created from a frame where a scene is switched and a frame specified by users and displayed. In addition, thumbnails can be generated regarding an interval between a frame obtained at a playback time point of, for example, 1 minute from the start of the video and a last frame of the video in the above-described manner, and displayed. By this configuration, the content of the video file can be recognized more efficiently even when the video starts with a fade-in or a logo of a production company.

Furthermore, in the above-described embodiments, thumbnails are generated for video files. However, when there are many still image files regarding a certain event, e.g., when many still images are captured with a digital camera on a field day or during a trip, thumbnails may be generated for those still image files in the similar manner and displayed. More specifically, a plurality of still image files may be divided into groups each containing A/2^n ("A" represents the number of still image files) still image files. Display data of thumbnails may be generated from the first still image file in each divided group. The generated thumbnails may be displayed in a specified order.

In addition, in the above-described embodiments, the video can be played back from a frame obtained at a playback time point T/2 by double-clicking on, for example, the thumbnail TN(1,2) (Fig. 4). More specifically, the video can be played back from a frame at a time point corresponding to the double-clicked thumbnail to the frame corresponding to the next thumbnail or to the last frame of the video file. Furthermore, in the above-described routine 100, the video file is played back at STEP 123. However, a routine (i.e., a program) for playback may be included in the routine 100 or may be an external routine-.

Additionally, a case where the embodiments of the present invention are applied to a personal computer is described above. The embodiments of the present invention may be applied to dedicated players (e.g., video playback apparatuses). Moreover, in the above-described embodiments, various operations for videos may be performed when thumbnails are displayed. In such a case, the thumbnails are displayed as video thumbnails. Simultaneously displaying a plurality of video thumbnails makes recognition of the content easier.

In addition, in a case where the file storage unit 201 resides in a server on the network, it may take a longer time to acquire videos, which users may or may not view, to generate thumbnails. Accordingly, the thumbnail creating unit 204 may be also provided in the server on the network, and the display data of thumbnails may be sent instead of the video files. More specifically, in this case, an instruction given from the users is sent to the thumbnail creating unit 204 in the server through the network. The thumbnail creating unit 204 included in the server then creates the display data of the thumbnails. The thumbnail data is sent to the user's personal computer 10, i.e., a client terminal and displayed.

Furthermore, each thumbnail may be video. In such a case where, for example, the total playback duration time T of the video file is 6 minutes and the value of n representing the number of times the operation is performed is set at 2 (n = 2), video thumbnails for the thumbnails TN(1), TN.(3), TN(2), TN (4) may be played back from frames at time points of 0 seconds, 1 minute 30 seconds, 3 minutes, and 4 minutes 30 seconds, respectively. Such video thumbnails allow users to recognize content of video files more accurately than a case where the still image thumbnails are used.

In addition; when the video thumbnails are displayed, operations such as a playback operation, a stop operation, a fast rewind operation, and a fast forward operation, can be performed or processed collectively on all of the video thumbnails. For example, when the stop operation is performed on a video thumbnail of a given video file, the video thumbnails of other video content can also be stopped. With this configuration, a time for operating each video thumbnail can be saved.

Moreover, content other than videos, such as still image files, audio files, text files, may also exist in file storage unit 201. A method for displaying the content other than videos may differ depending on types of the content. For example, regarding still images, reduced-size still images may be displayed as the thumbnails, or characteristic parts in the images (e.g., parts where a face of a person is displayed) may be clipped and used as the thumbnails.

Additionally, for example, icons of a musical note may be displayed as thumbnails to indicate that audio files are voice data files. In addition, when the audio files are music files, different icons may be displayed for each category of music.

It should be understood by those skilled in the art that various modifications, combinations, sub-combinations and alterations may occur depending on design requirements and other factors insofar as they are within the scope of the appended claims or the equivalents thereof.

### [List of Abbreviated Terms]

- BIOS:: Basic Input/Output System
- CPU:: Central Processing Unit
- D/A:: Digital to Analog
- LAN:: Local Area Network
- NAS:: Network Attached Storage
- OS:: Operating System
- RAM:: Random Access Memory
- ROM:: Read Only Memory
- Web:: World Wide Web

## Claims

1. A video playback apparatus comprising:
a thumbnail creating unit for creating thumbnail image data for still image files; and
a user operation unit for receiving an instruction from a user, wherein
the thumbnail creating unit is arranged to divide the still image files into 2ⁿ (n is an integer not less than 0) groups, to create the thumbnail image data from the first still image file of each of the divided groups, and to supply the created thumbnail image data to an image displaying unit to cause the image displaying unit to display thumbnail images corresponding to the thumbnail image data, and wherein
upon the user operation unit receiving a-first predetermined operation, the thumbnail creating unit is arranged to increment the value n by 1 to increase the number of thumbnail images, corresponding to thumbnail image data, to be displayed on the image displaying unit, whereas
upon the user operation unit receiving a second predetermined operation, the thumbnail creating unit is arranged to decrement the value n by 1 to decrease the number of thumbnail images, corresponding to the thumbnail image data, to be displayed on the image displaying unit.

2. A video playback apparatus according to claim 1, wherein
the thumbnail creating unit is arranged to divide a total playback duration time T of the video file into 2ⁿ intervals, and to create the thumbnail image data from image data of the first frame of each of the divided intervals.

3. The apparatus according to Claim 2, wherein the thumbnail creating unit is arranged to create the thumbnail image data for a frame specified by the user and to cause the image displaying unit to display a thumbnail image corresponding to the thumbnail image data.

4. The apparatus according to Claim 2 or 3, further comprising:
a playback unit for playing back the video file from a frame corresponding to the specified thumbnail image data upon the user operation unit receiving an instruction to specify a given thumbnail image data.

5. The apparatus according to any one of Claims 2 to 4, wherein the thumbnail creating unit is arranged to switch the thumbnail image data at predetermined intervals to cause the thumbnail images, corresponding to the thumbnail image data, to be displayed.

6. The apparatus according to any one of Claims 2 to 5, wherein the thumbnail creating unit is arranged to set a frame corresponding to the thumbnail image data specified by a user with the user operation unit as a starting point, whereas the thumbnail creating unit is arranged to set a frame corresponding to the thumbnail image data following the specified thumbnail image data as an ending point, to create the thumbnail image data while considering an interval from the starting frame to the ending frame as the total playback duration time T, and to cause the thumbnail images, corresponding to the thumbnail image data, to be displayed.

7. An image displaying method for allowing creation of thumbnail image data from a video file and for displaying thumbnail images corresponding to the thumbnail image data, the method comprising the steps of:
dividing a total playback duration time T of the video file into 2ⁿ (n is an integer not less than 0) intervals;
creating the thumbnail image data from image data of the first frame of each of the divided intervals;
supplying the created thumbnail image data to an image displaying unit to cause the image displaying unit to display the thumbnail images corresponding to the thumbnail image data; and
incrementing, upon a first predetermined operation being performed, the value n by 1 to increase the number of thumbnail images, corresponding to the thumbnail image data, to be displayed on the image displaying unit, whereas decrementing, upon a second predetermined operation being performed, the value n by 1 to decrease the number of thumbnail images, corresponding to the thumbnail image data, to be displayed on the image displaying unit.
